# EUROPÄISCHE PATENTSCHRIFT

(11) **EP 1 393 164 B1**
(45) Veröffentlichungstag und Bekanntmachung des Hinweises auf die Patenterteilung: **22.08.2007**
(21) Anmeldenummer: 02740572.9
(22) Anmeldetag: 07.05.2002
(51) Int. Cl.: G06F 9/30, G06F 9/318

(54) **PROZESSOR MIT INTERNER SPEICHERKONFIGURATION UND ANORDNUNG MIT DIESEM PROZESSOR**
PROCESSOR COMPRISING AN INTERNAL MEMORY CONFIGURATION AND SYSTEM COMPRISING SAID PROCESSOR
PROCESSEUR A CONFIGURATION DE MEMOIRE INTERIEURE ET SYSTEME COMPRENANT LEDIT PROCESSEUR

(30) Priorität: 05.06.2001 DE 10127195
(43) Veröffentlichungstag der Anmeldung: 03.03.2004
(73) Patentinhaber: Infineon Technologies AG, 81669 München (DE)
(72) Erfinder: ELBE, Astrid, 81243 München (DE); JANSSEN, Norbert, 81667 Muenchen (DE)
(74) Vertreter: Zinkler, Franz
(86) Internationale Anmeldenummer: PCT/EP2002/005031
(87) Internationale Veröffentlichungsnummer: WO 2002/099630

(56) Entgegenhaltungen:
- WO-A-00/79394
- US-A- 5 926 646
- US-A- 6 157 996

## Beschreibung

Die vorliegende Erfindung bezieht sich auf Computerarchitekturen und insbesondere auf Prozessorarchitekturen mit einer arithmetischen Einheit und einem Registerspeicher.

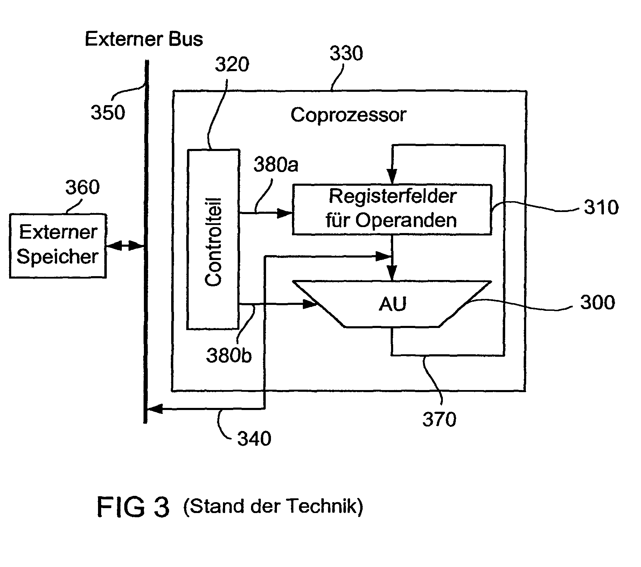

Fig. 3 zeigt eine bekannte Prozessorarchitektur am Beispiel eines Coprozessors. Der Coprozessor umfaßt eine arithmetische Einheit 300, einen Registerspeicher 310 und ein Controlteil 320. Die arithmetische Einheit 300, der Registerspeicher 310 für Operanden für die arithmetische Einheit sowie der Controlteil 320 sind physisch auf einem Coprozessor 330 untergebracht. Der Coprozessor steht über einen Verbindungsbus 340 mit einem externen Bus 350 in Verbindung. Ebenfalls mit dem externen Bus 350 verbunden ist ein externer Speicher 360, eine Host-CPU (nicht gezeigt) sowie Eingabe/Ausgabe-Schnittstellen (nicht gezeigt) etc.

Die arithmetische Einheit ist mit dem Registerspeicher über einen internen Bus 370 verbunden. Der Controlteil 320 kann über Steuerleitungen 380a, 380b mit dem Registerspeicher 310 bzw. der arithmetischen Einheit 300 kommunizieren. Wie es bekannt ist, ist die arithmetische Einheit (AU) 300 ausgebildet, um Befehle auf Operanden, die in dem Registerspeicher 310 gespeichert sind, auszuführen. Hierzu steuert der Controlteil 320 den Registerspeicher 310, um die Operanden, die von einem speziellen durch die AU 300 auszuführenden Befehl benötigt werden, in die AU hinein zu laden, damit der Befehl auf die Operanden ausgeführt werden kann. Das Ergebnis der arithmetischen Operation wird über den internen Bus 370 wieder zurück in den Registerspeicher geschrieben, um von dort auf Veranlassung des Controlteils 320 wieder für einen nächsten Befehl zur Verfügung zu stellen, oder um über den Verbindungsbus 340 zu dem externen Speicher gebracht zu werden. Typischerweise ist für einen Standardprozessor der Registerspeicher so ausgelegt, daß er eine bestimmte Anzahl von Registern hat, die für übliche, durch die arithmetische Einheit auszuführende Berechnungen benötigt werden. Ist der Prozessor ein Allzweckprozessor, so werden je nach zu berechnendem Algorithmus bestimmte Register des Registerspeichers 310 benötigt werden, während andere Register, die von einem bestimmten Algorithmus nicht benötigt werden, ungenutzt sind.

Wird dagegen für eine Berechnung eine größere Anzahl von Registern benötigt, als sie im Registerspeicher 310 vorhanden sind, so werden die Operanden, die im Registerspeicher 310 nicht Platz haben, im externen Speicher 360 abgespeichert. Wenn die arithmetische Einheit 300 für ihre Berechnungen Daten benötigt, die nicht im Registerspeicher 310 vorhanden sind, so müssen diese Operanden aus dem externen Speicher 360 über den Verbindungsbus 340 geladen werden. Im Gegensatz zu dem Datenverkehr auf dem internen Bus 370, der aufgrund der Konfiguration des internen Busses und nicht zuletzt aufgrund der kurzen physikalischen Längen sehr schnell abläuft, besteht für einen Datenverkehr zwischen dem externen Speicher 360 und der arithmetischen Einheit 300 ein hoher Aufwand. Dieser Aufwand äußert sich wie gesagt durch die längere Übertragungszeit der Daten aufgrund der typischerweise physikalisch viel größeren Längen des externen Busses und des Verbindungsbusses 340 sowie in der Signalisierung, um einen Operandentransfer vom externen Speicher 360 zu der arithmetischen Einheit 300 bzw. einen Operandentransfer von der arithmetischen Einheit 300 zurück zu dem externen Speicher 360 zu signalisieren.

Insbesondere bei sicherheitsrelevanten Anwendungen, d. h. wenn der Coprozessor 330 ein Kryptocoprozessor ist und beispielsweise auf einer Chipkarte implementiert ist oder Teil eines Sicherheits-ICs bildet, existiert ferner ein Sicherheitsproblem, wenn Operanden vom externen Speicher 360 über den externen Bus in die arithmetische Einheit 300 und zurück geladen werden müssen. Für einen Angreifer ist es einfacher, den externen Bus auf dem Chip zu lokalisieren und "anzuzapfen", als den internen Bus 370 herauszufinden und anzuzapfen. Ein Grund dafür ist die typischerweise regelmäßige Anordnung des externen Busses 350 auf dem Chip sowie die wesentlich größere Länge des externen Busses im Vergleich zum internen Bus 370 des Coprozessors. Insbesondere wenn der Coprozessor selbst als integrierte Schaltung implementiert ist, ist die physikalische Länge des externen Busses 370 sehr klein, so daß ein Abhören dieses Busses nahezu unmöglich ist. Ganz anders sieht es dagegen für den externen Bus 350 aus, welcher über eine I/O-Schnittstelle mit dem Coprozessorchip verbunden sein muß.

Hinsichtlich der Auslegung des Registerspeichers 310 wird üblicherweise eine nicht zu große Registerspeicherkapazität verwendet, da bei Algorithmen, die lediglich eine kleine Anzahl von Operanden benötigen, ein großer Teil des Registerspeichers 310 ungenutzt sein würde, d. h. brach liegen würde. Registerspeicherzellen sind, insbesondere wenn eine große Anzahl derselben auf einem Chip untergebracht werden muß, relativ platzaufwendig. Um beispielsweise einen Kryptocoprozessor klein zu halten, wird daher die Anzahl der Registerzellen klein gehalten, um den Fall zu vermeiden, daß dauernd Registerspeicherplatz ungenutzt brach liegt und dennoch auf dem Chip Platz verbraucht. Es wird daher im Sinne der Platzeffizienz des Chips bewußt in Kauf genommen, daß für Algorithmen, die mehr Operanden benötigen, als Platz im Registerspeicher vorhanden ist, eine hohe Anzahl von Operandentransfers vom externen Speicher 360 in den Coprozessor 330 stattfinden muß.

Insbesondere bei einer Chipkarte, bei der der Arbeitsspeicher ohnehin sehr knapp ist und aufgrund der Größenbeschränkungen der Chipkarte vielleicht im Bereich von 2 bis 8 Kilobyte liegt, wird üblicherweise der Registerspeicher 310 eines Peripherieelements, wie z. B. des Coprozessors 330, eines Zufallszahlengenerators, eines Hash-Moduls, eines Moduls für eine symmetrische Kryptographie (DES, AES) oder eines anderen Peripheriegeräts, sehr klein gewählt, damit für die Funktionalität der Chipkarte ein ausreichender Arbeitsspeicher (XRAM) zur Verfügung bleibt. Ferner wird darauf hingewiesen, daß die Chipkarte auch noch einen Festwertspeicher (ROM) sowie einen nicht-flüchtigen beschreibbaren Speicher (EEPROM, Flash, etc.) umfassen muß, so daß, um die Platzanforderungen des Chips auf der Chipkarte zu erfüllen, der Registerspeicher 310 üblicherweise so klein als irgendwie vertretbar ausgeführt wird.

Dies wird jedoch, wie es ausgeführt worden ist, durch Sicherheitskompromisse und Zeitverluste aufgrund des Operandentransfers zwischen dem externen Speicher 360 und der arithmetischen Einheit 300 erkauft.

Das U.S.-Patent Nr. 5,926,646 offenbart Kontext-abhängige Speichergemappte Register für eine transparente Erweiterung eines Register-Files. Computersysteme haben typischerweise einen relativ großen relativ langsamen Hauptspeicher in Form von DRAM-Modulen. Ferner werden Register in einem Register-File vorgesehen, die innerhalb des Mikroprozessors vorgesehen sind. Hierzu wird für einen Mikroprozessor ein erweiterter Satz von Registern vorgesehen, und zwar zusätzlich zu dem architekturmäßig-vorgegebenen Satz von Registern, der durch die Mikroprozessorarchitektur spezifiziert ist. Der erweiterte Satz von Registern ist Speicher-gemappt innerhalb des Kontexts des gerade ausgeführten Programms. Bei einer Kontextumschaltung wird der Zustand der erweiterten Register zu entsprechenden Speicherpositionen gespeichert. Es können mehr erweiterte Register definiert werden als in einer gegenwärtigen Version des Mikroprozessors implementierbar sind. In diesem Fall wird ein Zugriff auf ein solches erweitertes Register, das ja in dem Register-File nicht physisch vorhanden ist, auf eine bestimmte gemappte Speicher-Position weitergeleitet. Das U.S.-Patent Nr. 6,157,996 offenbart einen Prozessor, der programmierbar konfigurierbar ist, um Befehle mit vergrößerten variablen Byte-Längen auszuführen. Zu diesem Zweck werden erweiterte Register implementiert, deren Anzahl groß sein soll. Ferner wird ein erweiterter Befehlssatz für eine X86-Architektur vorgeschlagen, die einen Zugriff auf eine erheblich größere Anzahl von Allzweckregistern ermöglicht, ohne den Entwurf des Befehl-Decoders und anderer Abschnitte der CPU zu modifizieren. Ein in einer CPU vorhandenes Register-File umfasst einen Standardregistersatz und einen Satz von erweiterten Registern. Der Satz von erweiterten Registern umfasst alle Register innerhalb des Standardregistersatzes sowie eine zusätzliche Mehrzahl von Registern.

Die Aufgabe der vorliegenden Erfindung besteht darin, einen sicheren und schnellen Prozessor sowie ein sicheres und schnelles Rechnersystem zu schaffen.

Diese Aufgabe wird durch einen Prozessor nach Patentanspruch 1 oder durch ein Rechnersystem nach Patentanspruch 8 gelöst.

Der vorliegenden Erfindung liegt die Erkenntnis zugrunde, daß eine Erhöhung der Sicherheit und eine Zeitersparnis sowie Anforderungen an eine gute Speichereffizienz dadurch erreicht werden können, daß der Registerspeicher so groß ausgelegt wird, daß für die überwiegende Anzahl von Algorithmen, die der Prozessor ausführen muß, die hierfür erforderlichen Operanden in dem Registerspeicher gespeichert werden können, und daß der in dem Registerspeicher noch verbleibende Speicherplatz für andere Daten als die Operanden, also beispielsweise als Arbeitsspeicher, zur Verfügung gestellt wird.

Hierzu wird gemäß der vorliegenden Erfindung eine Registerspeicherkonfigurationseinheit eingesetzt, die den Registerspeicher so konfiguriert, daß die benötigte Anzahl von Operanden für einen Algorithmus, den die arithmetische Einheit berechnen muß, in dem Registerspeicher abgespeichert werden kann, und daß der Rest des Registerspeichers im Gegensatz zum Stand der Technik nicht "brach liegt", sondern für andere Daten als die Operanden zur Verfügung gestellt wird. Die Registerspeicherkonfigurationseinheit baut bevorzugterweise auf einem Adressierungsverfahren auf, das ein Memorymapping durchführt, so daß der freie Teil des Registerspeichers in das XRAM eingemapped ist, obgleich der freie Teil physikalisch direkt im Registerspeicher für die arithmetische Einheit des Prozessors vorhanden ist.

Bei einem bevorzugten Ausführungsbeispiel der vorliegenden Erfindung ist der Prozessor ein Kryptoprozessor, und ist die arithmetische Einheit ein Langzahlrechenwerk für Operanden bis zu 2048 Bit Länge, so daß ein erheblicher Registerspeicher bereit gestellt werden muß, wenn beispielsweise fünf Operanden einer solchen Länge benötigt werden. Bei einem bevorzugten Ausführungsbeispiel ist der Prozessor für verschiedene kryptographische Algorithmen ausgebildet, unter denen durchaus ein Algorithmus sein kann, der weniger Operanden bzw. Operanden mit einer sehr viel kürzeren Länge benötigt. Wenn beispielsweise eine RSA-Signatur betrachtet wird, für die optimalerweise für die modulare Exponentiation vier Register mit einer Länge von 2048 Bit benötigt werden, und wenn gleichzeitig eine Elliptische-Kurven-Kryptographieanwendung (z. B. EC-DSA) betrachtet wird, bei der z. B. zur Berechnung einer elektronischen Signatur 11 Register mit einer Länge von 190 Bits gebraucht werden, so würde trotz der größeren Anzahl von Operanden bei der Elliptische-Kurven-Kryptographie nahezu 1 Kilobyte an Registerspeicher brach liegen, was insbesondere dann problematisch ist, wenn der gesamte Arbeitsspeicher (XRAM) ohnehin nur zwischen 2 und 8 Kilobyte liegt. Erfindungsgemäß wird durch die Speicherkonfigurationseinheit der in dem Registerspeicher nicht benötigte Platz in das XRAM eingemapped, so daß der Prozessor diesen Speicher als Arbeitsspeicher verwenden kann, oder, wenn an eine Chipkarte als Rechnersystem gedacht wird, dieser Speicher auch von anderen Komponenten der Chipkarte benutzt werden kann. Andererseits kann nun, aufgrund der vorliegenden Erfindung, der Registerspeicher so groß ausgelegt werden, daß er sämtliche Operanden für den Kryptoalgorithmus aufnehmen kann, der den meisten Registerspeicherplatz für seine Operanden benötigt. Falls nämlich ein Algorithmus ausgeführt wird, der eine wesentlich geringere Anzahl von Registerspeichern benötigt, kann der nicht benötigte Registerspeicher einfach als Arbeitsspeicher zur Verfügung gestellt werden und liegt nicht brach.

Für den Fall, daß der erfindungsgemäße Prozessor als Kryptocoprozessor in Form eines Peripherieelements auf einer Chipkarte ausgeführt wird, kann bei einem bevorzugten Ausführungsbeispiel der vorliegenden Erfindung die Registerspeicherkonfigurationseinheit so ausgebildet sein, daß der gesamte Registerspeicher des Kryptocoprozessors für andere Peripherieelemente der Chipkarte oder für die Host-CPU als Arbeitsspeicher zur Verfügung gestellt wird, wenn die arithmetische Einheit des Kryptocoprozessors gerade nicht aktiv ist. Damit kann insbesondere bei einem Chipkarten-IC, bei der aufgrund einer maximalen Chipgröße sehr enge Speicherressourcen zur Verfügung sind, sichergestellt werden, daß immer der gesamte Speicher der Chipkarte, unabhängig davon, ob er als externer Speicher oder als Registerspeicher ausgeführt ist, in Betrieb ist bzw. für Anwendungen zur Verfügung gestellt werden kann.

Es sei darauf hingewiesen, daß der interne Bus die volle Breite des Rechenwerks hat, während der äußere Bus eine normale Breite hat, wie z. B. 8, 16 oder 32 Bits. Bei einem Langzahlrechenwerk hat der interne Bus dagegen z. B. eine Breite von 1024 Bits. Daraus wird deutlich, daß ein Operandentransfer eines Langzahloperanden vom Speicher über den externen Bus mehrere Buszyklen braucht und damit zeit- und verwaltungsaufwendig ist, während dieser Operand auf dem internen - breiten - Bus ohne weiteres einfach übertragen werden kann.

Bevorzugte Ausführungsbeispiele der vorliegenden Erfindung werden nachfolgend bezugnehmend auf die beiliegenden Zeichnungen detailliert erläutert. Es zeigen:
- Fig. 1: ein Blockschaltbild eines erfindungsgemäßen Prozessors bzw. eines erfindungsgemäßen Rechnersystems;

- Fig. 2: eine Symboldarstellung der Speichersituation bei einem bevorzugten Ausführungsbeispiel der vorliegenden Erfindung, bei dem ein Teil des Registerspeichers des Coprozessors in den Arbeitsspeicher des Rechnersystems eingemapped ist; und
- Fig. 3: eine bekannte Prozessorarchitektur.

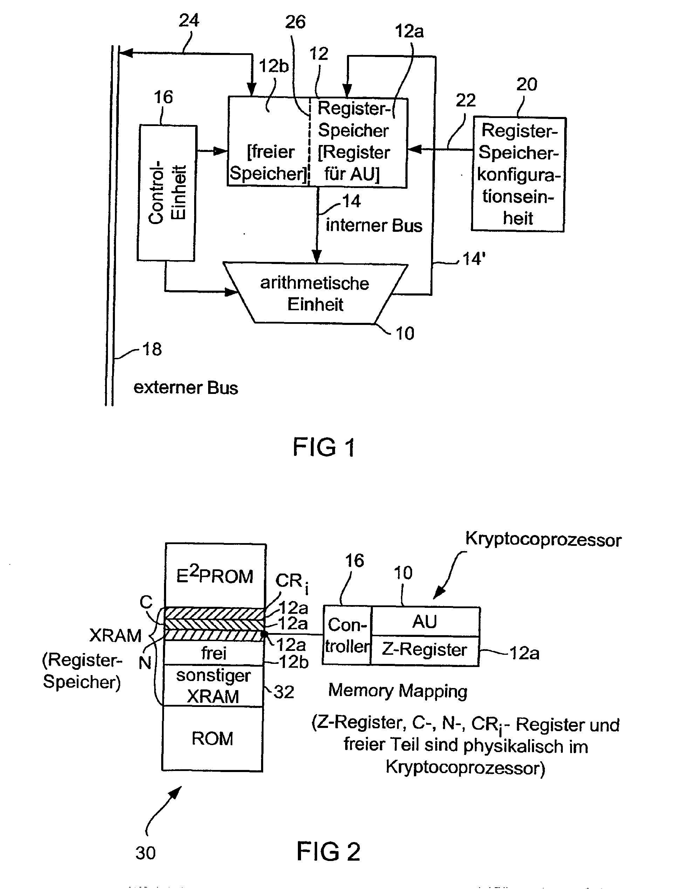

Fig. 1 zeigt einen erfindungsgemäßen Prozessor. Der Prozessor umfaßt eine arithmetische Einheit 10, einen Registerspeicher 12, einen internen Bus 14 zwischen dem Registerspeicher 12 und der arithmetischen Einheit 10, einen weiteren internen Bus 14' zwischen der arithmetischen Einheit 10 und dem Registerspeicher 12, um Ergebnisse der arithmetischen Einheit wieder in den Registerspeicher 12 einspeisen zu können, eine Steuereinheit 16, die über Steuerleitungen den Betrieb der arithmetischen Einheit 10 und den Betrieb des Registerspeichers 12 steuern kann, einen externen Bus 18 zur Kommunikation mit Peripheriegeräten, wie z. B. einer Eingang/Ausgang-Schnittstelle, einem anderen Prozessor, etc., und eine Registerspeicherkonfigurationseinheit 20. Die Registerspeicherkonfigurationseinheit 20 kann über eine Speicherkonfigurationsleitung 22 den Registerspeicher 12 erfindungsgemäß konfigurieren.

Wie es in Fig. 1 gezeigt ist, ist der Registerspeicher 12 so konfiguriert, daß er einen Speicherabschnitt 12a hat, in dem die Register für die arithmetische Einheit 10 konfiguriert werden können, und daß er einen weiteren freien Speicherabschnitt 12b hat, auf den mittels eines Registerspeicherbusses 24 über den externen Bus Daten eingeschrieben oder Daten ausgelesen werden können.

Vorzugsweise ist der Registerspeicher 12 so groß konfiguriert, daß für alle Rechenaufgaben, die von der arithmetischen Einheit 10 durchgeführt werden können, genügend Register für die von der arithmetischen Einheit 10 benötigten Operanden zur Verfügung gestellt werden können. Wenn die Rechenaufgabe, die durch die arithmetische Einheit 10 zu bewältigen ist, sehr viel Registerspeicherplatz benötigt, wird die Registerspeicherkonfigurationseinheit 20 den Registerspeicher so konfigurieren, daß der gesamte Registerspeicher 12 ähnlich einem üblichen Registerspeicher zur Speicherung der Operanden für die arithmetische Einheit 10 dient. In anderen Worten ausgedrückt wird eine Speicheraufteilungsgrenze 26 symbolisch ausgedrückt ganz nach links in Fig. 1 verschoben, so daß der freie Speicher 12b Null ist, während der Speicher für Operanden für die arithmetische Einheit 12a den gesamten Registerspeicher 12 ausfüllt. Muß die arithmetische Einheit 10 dagegen eine Rechenaufgabe bewältigen, bei der nur sehr wenig Operanden und insbesondere auch beispielsweise sehr kurze Operanden benötigt werden, so wird die Registerspeicherkonfigurationseinheit 20 den Registerspeicher so konfigurieren, daß die Operandenregister von dem Registerspeicher 12 zur Verfügung gestellt werden, daß jedoch der Rest des Registerspeichers als freier Speicher 12b konfiguriert wird, in den andere Daten eingeschrieben werden können. Nachdem der Registerspeicher 12 typischerweise ein flüchtiger Speicher ist, wird der freie Speicherplatz 12b des Registerspeichers 12 dem Prozessor als Arbeitsspeicher, z. B. als XRAM, zur Verfügung gestellt. Die Speicheraufteilungsgrenze 26 wird dann irgendwo in der Mitte des Registerspeichers 12 liegen und den Fall repräsentieren, der in Fig. 1 gezeichnet ist.

Ist der in Fig. 1 gezeichnete Prozessor beispielsweise als Coprozessor ausgeführt und über den externen Bus 18 mit einer Host-CPU verbunden, so ist die Registerspeicherkonfigurationseinheit 20 bei dem bevorzugten Ausführungsbeispiel der vorliegenden Erfindung so ausgebildet, daß die Speicheraufteilungsgrenze 26 bezugnehmend auf Fig. 1 ganz nach rechts verschoben wird, und zwar in dem Fall, in dem die arithmetische Einheit 10, die einen Teil des Coprozessors bildet, nicht aktiv ist. Dieser Fall ist denkbar, wenn lediglich die Host-CPU arbeitet, jedoch nicht der in Fig. 1 gezeigte Coprozessor. Dann wird der Registerspeicher 12 des Coprozessors vollständig der Host-CPU des Prozessorsystems zur Verfügung gestellt. Da die arithmetische Einheit 10 gerade nicht aktiv ist, benötigt sie auch keine Operandenregister im Registerspeicher. Im Gegensatz zum Stand der Technik, bei dem der Registerspeicher 12 immer dann brach liegt, wenn die arithmetische Einheit 10 gerade nicht aktiv ist, wird erfindungsgemäß der Registerspeicher 12 aufgrund der Handlungen der Registerspeicherkonfigurationseinheit 20 einer in Fig. 1 nicht gezeigten Host-CPU zur Verfügung gestellt.

Diese Maßnahme ist besonders bei Prozessorsystemen mit sehr begrenzten Speicherressourcen vorteilhaft, wie sie beispielsweise bei einer Chipkarte oder einem Sicherheits-IC zu finden sind. Am Beispiel einer Chipkarte, die neben einer Host-CPU einen Kryptocoprozessor sowie weitere Peripheriegeräte sowie einen nicht-flüchtigen Speicher (E2PROM), einen flüchten Arbeitsspeicher (z. B. XRAM) oder einen Nur-Lese-Speicher (ROM) aufweist, ist zu sehen, daß das Zur-Verfügung-Stellen von freien Teilen des Registerspeichers bzw. gegebenenfalls das Zur-Verfügung-Stellen des gesamten Registerspeichers des Kryptocoprozessors die Speicherressourcen erheblich vergrößert werden können. Die gesamte Speicherkapazität einer Chipkarte kann bei vielleicht 5 Kilobyte liegen, während der Arbeitsspeicher zwischen 2 und 3 Kilobyte groß ist. Der Kryptocoprozessor benötigt typischerweise einen relativ großen Registerspeicher, da mehrere Langzahloperanden, wie z. B. 4 Langzahloperanden mit einer Länge von jeweils 2048 Bit, für sichere RSA-Berechnungen benötigt werden. Wird dieser zusätzliche Speicher von etwa 1 Kilobyte zur Verfügung gestellt, wenn der Kryptocoprozessor nicht aktiv ist, so kann der Arbeitsspeicher (XRAM) für die Host-CPU um bis zu 1/3 vergrößert werden, ohne daß zusätzliche Speicherzellen zur Verfügung gestellt werden müssen.

Andererseits hat die Implementierung eines großen Registerspeichers den Vorteil, daß die arithmetische Einheit optimal mit Operanden versorgt werden kann, wobei der Operandentransfer lediglich über den internen Bus 14 (Fig. 1) statt findet, ohne daß Operanden über den externen Bus der arithmetischen Einheit zugeführt werden müssen, wie es im Stand der Technik der Fall ist. Damit jedoch für andere Algorithmen, die nicht so viel Registerspeicher benötigen, der nicht benötigte Registerspeicher nicht "brach liegt", ist die Registerspeicherkonfigurationseinheit erfindungsgemäß vorgesehen, um den Registerspeicher in einen freien Speicherteil 12b und einen Registerspeicherteil für die arithmetische Einheit 12a zu konfigurieren.

Im nachfolgenden wird auf Fig. 2 eingegangen, um das erfindungsgemäße Einmappen des freien Speicherplatzes 12b in den XRAM-Arbeitsspeicher eines Prozessorsystems darzustellen, bei dem die in Fig. 1 gezeigte arithmetische Einheit zusammen mit dem Registerspeicher (12a und 12b) und der Steuereinheit 16 (Controller) einen Kryptocoprozessor eines Prozessorsystems beispielsweise auf einer Chipkarte bildet.

Links in Fig. 2 ist eine Speicherhierarchie 30 dargestellt, die einen nicht-flüchtigen Speicher in Form eines E2PROM, einen Festwertspeicher in Form eines ROM sowie einen flüchtigen Arbeitsspeicher in Form eines XRAM bildet. Der Arbeitsspeicher XRAM umfaßt sowohl den Registerspeicher 12a sowie einen sonstigen XRAM-Arbeitsspeicher 32, der an irgendeiner anderen Stelle auf der Chipkarte ausgeführt ist. Wie es in Fig. 2 gezeigt ist, sind in dem XRAM-Arbeitsspeicher verschiedene Register C, N und CRi konfiguriert, wobei diese Registerspeicherplätze, die durch das Bezugszeichen 12a in Fig. 2 bezeichnet sind, nicht Teil des sonstigen XRAM 32 der Chipkarte sind, sondern ebenso wie der Speicherplatz für das Z-Register physikalisch im Kryptocoprozessor angeordnet sind. Die Register Z, N, C und CRi werden beispielsweise für die Berechnung von RSA-Signaturen benötigt.

Bei dem in Fig. 2 gezeigten Ausführungsbeispiel ist zu sehen, daß der Speicherplatz für die Register C, N und CRi in den Arbeitsspeicher der Chipkarte eingemapped sind, während dies für das Z-Register nicht zutrifft. Falls die Registerspeicherkonfigurationseinheit den Registerspeicher des Kryptocoprozessors ansteuert, daß für die Berechnung einer bestimmten Aufgabe keine Register C, N und CRi benötigt werden, so kann der Platz dieser Register aufgrund des Einmappens ohne weiteres von anderen Elementen als der arithmetischen Einheit 10 des Kryptocoprozessors verwendet werden. Für das Z-Register von Fig. 2 trifft dies dagegen nicht zu. Unabhängig davon, ob das Z-Register benötigt wird oder nicht, steht dieses als Arbeitsspeicher für die Chipkarte nicht zur Verfügung. Daraus ist zu sehen, daß es für bestimmte Anwendungen auch sinnvoll sein kann, nicht den gesamten Registerspeicher, der physikalisch im Kryptocoprozessor vorhanden ist, in den Arbeitsspeicher der Chipkarte einzumappen, sondern lediglich einen bestimmten Teil.

Im nachfolgenden wird auf verschiedene mögliche Speicherkonfigurationen bzw. Speicherbedürfnisse für verschiedene kryptographische Algorithmen eingegangen. Die optimale Speicherkonfiguration für einen Kryptographieprozessor ist abhängig von den Kryptoalgorithmen, die auf dem Kryptoprozessor berechnet werden sollen. So benötigt man beispielsweise für eine RSA-Signatur die Register C, N, Z und ein CRi-Register, welche je nach Sicherheitsanforderungen eine Länge zwischen jeweils 1000 bis 2500 Bit haben können. Es ist jedoch auch möglich, die RSA-Signaturberechnung zu beschleunigen, indem man weitere CRi-Register hinzufügt. In den weiteren CRi-Registern können dann vorberechnete Werte abgespeichert werden, die die RSA-Signaturberechnung beschleunigen. Erfindungsgemäß wird die Registerspeicherkonfigurationseinheit 20 den Registerspeicher 12 so konfigurieren, daß auch für die weiteren CRi-Register Speicherplatz zugewiesen wird, so daß der freie Speicher 12b im Vergleich zum Fall von vier Registern kleiner wird, daß jedoch die Berechnung vergrößert wird, da auf die in den CRi-Register gespeicherten Operanden schnell und einfach über den internen Bus 14 zwischen dem Registerspeicher 12 und der arithmetischen Einheit 10 übertragen werden können. Voraussetzung hierfür ist natürlich, daß der Registerspeicher 12 ausreichend groß ausgeführt ist. Ein weiteres Beispiel für eine optimale Registerspeicherkonfiguration ist die modulare Exponentiation unter Verwendung des "Square and Multiply"-Algorithmus. Wählt man aus Sicherheitsgründen identische Rechenzeiten für Quadratur und Multiplikation, so muß der Operand für die Quadratur zweimal abgespeichert werden, d. h. im Register C und in einem CRi-Register. Auch hier wird ein zusätzliches CRi-Register benötigt, das durch die Registerspeicherkonfigurationseinheit in dem Registerspeicher 12 konfiguriert wird.

Eine große Dimensionierung des Registerspeichers ist jedoch hinsichtlich des Speicherplatzes unkritisch, da, wenn die gesamte Menge an Speicher im Registerspeicher nicht benötigt wird, dennoch der Speicher nicht, wie im Stand der Technik, "brach" liegt, sondern durch die Speicherkonfigurationseinheit 20 und den Verbindungsbus 24 über den externen Bus für anderen Komponenten des Prozessorsystems zur Verfügung gestellt wird.

Besteht ferner der Bedarf, elektronische Signaturen mit Hilfe elliptischer Kurven (EC-DSA) zu berechnen, so benötigt man beispielsweise in projektiven Koordinaten zusätzlich zu den Registern C, N und Z acht weitere Register, z. B. CRi, zur Abspeicherung von Kurvenparametern.

Wenn dagegen der Kryptoprozessor nicht benutzt wird, wird der gesamte Registerspeicher bzw. der überwiegende Teil des Registerspeichers (außer dem Z-Register von Fig. 2) durch die Registerspeicherkonfigurationseinheit als freier Speicher konfiguriert, in dem dann andere Daten gespeichert werden können.

Die Registerspeicherkonfigurationseinheit 20 ist ferner angeordnet, um abhängig von dem verwendeten Kryptoalgorithmus Anzahl und Größe der Operandenregister für die arithmetische Einheit zu konfigurieren. Auch die Länge der Register unterscheidet sich von Kryptoalgorithmus zu Kryptoalgorithmus. Während bei einer RSA-Berechnung ohne chinesischem Restsatz (CRT) alle Register die volle Länge haben müssen (beispielsweise 1024 oder 2048 Bit), genügen bei einer RSA-Berechnung mit CRT nur halb so lange Register, also Register mit einer Länge von 512 bzw. 1024 Bits.

Im Falle von kryptographischen Berechnungen auf der Basis von elliptischen Kurven brauchen die Register nur eine viel kürzere Länge, beispielsweise 160 oder 190 Bits.

Die Registerspeicherkonfigurationseinheit 20 ist angeordnet, um die Anzahl und Länge der Register über Befehle des Kryptoprozessors, d. h. der Steuereinheit 16, zu konfigurieren. Der nicht benötigte Platz steht für weitere Anwendungen zur Verfügung, was, wie es ausgeführt worden ist, insbesondere für Smartcards ein nicht zu unterschätzender Faktor ist, da solche Smartcards einen flüchtigen Speicher von nur zwischen 2 und 4 Kilobyte haben, so daß bereits ein nicht benutztes Register der Länge 2304 Bits dem Programmierer einer Chipkarte einen nicht zu vernachlässigenden zusätzlichen Speicherplatz liefert. Alternativ kann der Registerspeicher neben der Verwendung von Prozessorbefehlen auch durch Setzen von Bits in Statusregistern etc. durch die Einheit 20 erfolgen.

### Bezugszeichenliste

- 10: arithmetische Einheit
- 12: Registerspeicher
- 12a: Registerspeicher für die arithmetische Einheit
- 12b: freier Registerspeicher
- 14: interner Bus
- 14': interner Bus für Ergebnisse
- 16: Control-Einheit
- 18: externer Bus
- 20: Registerspeicherkonfigurationseinheit
- 22: Registerspeicherkonfigurations-Steuerleitung
- 24: Registerspeicher-Verbindungsbus
- 26: Registerspeicher-Grenzlinie
- 30: Speicherschema
- 32: sonstiger Arbeitsspeicher (XRAM)
- 300: arithmetische Einheit
- 310: Registerfelder für Operanden
- 320: Controlteil
- 330: Coprozessor
- 340: Verbindungsbus zwischen arithmetischer Einheit und externem Bus
- 350: externer Bus
- 360: externer Speicher
- 370: interner Bus
- 380a: Steuerleitung für die Registerfelder
- 380b: Steuerleitung für die arithmetische Einheit

## Patentansprüche

1. Prozessor mit folgenden Merkmalen:
einer arithmetischen Einheit (10) zum Verarbeiten von Operanden;
einem Registerspeicher (12) zum Speichern der Operanden;
einem internen Bus (14) zwischen dem Registerspeicher und der arithmetischen Einheit; und
**gekennzeichnet durch**
eine Registerspeicherkonfigurationseinheit (20), die ausgebildet ist, um den Registerspeicher so zu konfigurieren, daß den Operanden Speicherplatz (12a) in dem Registerspeicher zugewiesen wird, und daß Speicherplatz (12b) in dem Registerspeicher (12), der den Operanden nicht zugewiesen ist, für andere Daten als die Operanden zur Verfügung gestellt wird.

2. Prozessor nach Anspruch 1, bei dem die arithmetische Einheit (10), der Registerspeicher (12) und eine Steuereinheit zum Steuern der arithmetischen Einheit (10) und des Registerspeichers (12), um Operanden von dem Registerspeicher in die arithmetische Einheit zu laden, und um eine Operation mit den Operanden auszuführen, als integrierte Schaltung auf einem einzigen Chip ausgeführt sind.

3. Prozessor nach Anspruch 1 oder 2, bei dem die Operanden Langzahloperanden sind, die eine Länge von über 150 Bits haben.

4. Prozessor nach einem der vorhergehenden Ansprüche, der ferner einen externen Speicher und eine Adressierungseinheit aufweist, wobei die Adressierungseinheit ausgebildet ist, um den verbleibenden Speicherplatz (12b) des Registerspeichers (12) wie den externen Speicher zu adressieren.

5. Prozessor nach einem der vorhergehenden Ansprüche, bei dem die arithmetische Einheit (10) ausgebildet ist, um zumindest zwei Algorithmen auszuführen, wobei ein Algorithmus aufgrund der Länge und/oder Anzahl seiner verwendeten Operanden eine maximale Menge an Registerspeicherplatz benötigt, während ein anderer Algorithmus für seine Operanden eine kleinere Menge an Registerspeicherplatz benötigt,
wobei der Registerspeicher so dimensioniert ist, daß der Registerspeicherplatz zumindest gleich der maximalen Menge an Registerspeicherplatz ist, die der eine Algorithmus für seine Operation benötigt.

6. Prozessor nach einem der vorhergehenden Ansprüche, bei dem die arithmetische Einheit (10) und der Registerspeicher (12) über einen internen Bus (14) verbunden sind,
bei dem ein externes Element mit der arithmetischen Einheit (10) über einen externen Bus (18) verbunden ist, und
bei dem die Länge des externen Busses (18) größer als die Länge des internen Busses (14) ist.

7. Prozessor nach einem der vorhergehenden Ansprüche,
bei dem die Registerspeicherkonfigurationseinheit (20) angeordnet ist, um in dem Registerspeicher je nach Bedarf Register unterschiedlicher Anzahl und Länge zu konfigurieren.

8. Rechnersystem mit folgenden Merkmalen:
einer Host-CPU;
einem Peripheriegerät, das mit der Host-CPU über einen externen Bus (18) verbunden ist, und das einen internen Speicher (12) aufweist; und
**gekennzeichnet durch**
eine Speicherkonfigurationseinheit (20), wobei die Speicherkonfigurationseinheit (20) ausgebildet ist, um je nach Bedarf Platz (12a) aus dem internen Speicher dem Peripheriegerät zur Verfügung zu stellen, und Platz (12b) aus dem internen Speicher, der dem Peripheriegerät nicht zur Verfügung gestellt wird, über einen Zugriff mittels eines externen Busses (18, 24) für andere Daten zur Verfügung zu stellen.

9. Rechnersystem nach Anspruch 8, das ferner eine Adressierungseinrichtung aufweist, wobei die Adressierungseinrichtung angeordnet ist, um den internen Speicher des Peripheriegeräts, der dem Peripheriegerät nicht zur Verfügung gestellt wird, wie einen externen Speicher des Rechnersystems zu adressieren.

10. Rechnersystem nach Anspruch 8 oder 9,
bei dem die Registerspeicherkonfigurationseinheit (20) Teil des Peripheriegeräts ist.

11. Rechnersystem nach einem der Ansprüche 8 bis 10,
bei dem die Speicherkonfigurationseinheit (20) angeordnet ist, um zu überprüfen, ob das Peripheriegerät aktiv ist, und um in dem Fall, in dem das Peripheriegerät nicht aktiv ist, den gesamten internen Speicher des Peripheriegeräts dem Rechnersystem als Arbeitsspeicher zur Verfügung zu stellen.

12. Rechnersystem nach einem der Ansprüche 8 bis 11, das als Chipkarten-IC oder Security-IC ausgeführt ist.

## Claims

1. A processor, comprising:
an arithmetic unit (10) for processing operands;
a register memory (12) for storing operands;
an internal bus (14) between the register memory and the arithmetic unit; and
**characterized by**
a register memory configuration unit (20) designed to configure the register memory such that memory space (12a) in the register memory is assigned to operands and that memory space (12b) in the register memory (12) that is not assigned to operands is made available for other data than the operands.

2. The processor according to claim 1, wherein the arithmetic unit (10), the register memory (12) and a control unit for controlling the arithmetic unit (10) and the register memory (12) for loading operands from the register memory into the arithmetic unit and for carrying out an operation with the operands are designed as integrated circuit on a single chip.

3. The processor according to claims 1 or 2, wherein the operands are long number operands comprising a length of more than 150 bits.

4. The processor according to any of the previous claims, further comprising an external memory and an addressing unit, wherein the addressing unit is designed to address the remaining memory space (12b) of the register memory (12) like the external memory.

5. The processor according to any of the previous claims,
wherein the arithmetic unit (10) is designed to perform at least two algorithms, wherein one algorithm needs a maximum amount of register memory space due to its length and/or number of its used operands, while another algorithm needs a smaller amount of register memory space for its operands,
wherein the register memory is dimensioned such that the register memory space it at least equal to the maximum amount of register memory space needed by an algorithm for its operation.

6. The processor according to any of the previous claims, wherein the arithmetic unit (10) and the register memory (12) are connected via an internal bus (14),
wherein an external element is connected to the arithmetic unit (10) via an external bus (18), and
wherein the length of the external bus (18) is greater than the length of the internal bus (14).

7. The processor according to any of the previous claims,
wherein the register memory configuration unit (20) is disposed to configure registers of different number and length in the register memory as needed.

8. A computer system, comprising:
a host CPU;
a peripheral device connected to the host CPU via an external bus (18) and comprising an internal memory (12); and
**characterized by**
a memory configuration unit (20), the memory configuration unit (20) being designed to make space (12a) from the internal memory available to the peripheral device as needed, and to make space (12b) from the internal memory not being made available to the peripheral device available for other data by access via an external bus (18, 24).

9. The computer system according to claim 8, further comprising an addressing means, wherein the addressing means is disposed to address the internal memory of the peripheral device, which is not made available to the peripheral device, like an external memory of the computer system.

10. The computer system according to claims 8 or 9,
wherein the register memory configuration unit (20) is part of the peripheral device.

11. The computer system according to any of claims 8 to 10,
wherein the memory configuration unit (20) is disposed to check whether the peripheral device is active and in the case when the peripheral device is not active, to make the whole internal memory of the peripheral device available to the computer system as working memory.

12. The computer system according to any of claims 8 to 11, designed as chip card IC or security IC.

## Revendications

1. Processeur, aux caractéristiques suivantes:
une unité arithmétique (10) destinée à traiter des opérandes;
une mémoire à registres (12) destinée à mémoriser les opérandes;
un bus interne (14) entre la mémoire à registres et l'unité arithmétique; et
**caractérisé par**
une unité de configuration de mémoire à registres (20) réalisée de manière à configurer la mémoire à registres de sorte qu'aux opérandes soit attribué de l'emplacement de mémoire (12a) dans la mémoire à registres, et que l'emplacement de mémoire (12b) dans la mémoire à registres (12) qui n'est pas attribué aux opérandes soit mis à disposition pour d'autres données que les opérandes.

2. Processeur selon la revendication 1, dans lequel l'unité arithmétique (10), la mémoire à registres (12) et une unité de commande destinée à commander l'unité arithmétique (10) et la mémoire à registres (12) pour charger des opérandes de la mémoire à registres dans l'unité arithmétique et pour effectuer une opération avec les opérandes sont réalisées comme circuit intégré sur une seule puce.

3. Processeur selon la revendication 1 ou 2, dans lequel les opérandes sont des opérandes de nombre long qui ont une longueur de plus de 150 bits.

4. Processeur selon l'une des revendications précédentes, qui présente, par ailleurs, une mémoire externe et une unité d'adressage, l'unité d'adressage étant réalisée de manière à adresser l'emplacement de mémoire restant (12b) de la mémoire à registres (12) comme la mémoire externe.

5. Processeur selon l'une des revendications précédentes, dans lequel l'unité arithmétique (10) est réalisée de manière à effectuer au moins deux algorithmes, un algorithme requérant, du fait de la longueur et/ou du nombre de ses opérandes utilisés, une quantité maximale d'emplacement de mémoire à registres, tandis qu'un autre algorithme requiert pour ses opérandes une moindre quantité d'emplacement de mémoire à registres,
la mémoire à registres étant dimensionnée de sorte que l'emplacement de mémoire à registres soit au moins égal à la quantité maximale d'emplacement de mémoire à registres que requiert l'un des algorithmes pour son fonctionnement.

6. Processeur selon l'une des revendications précédentes, dans lequel l'unité arithmétique (10) et la mémoire à registres (12) sont reliées par l'intermédiaire d'un bus interne (14),
dans lequel un élément externe est relié à l'unité arithmétique (10) par l'intermédiaire d'un bus externe (18), et
dans lequel la longueur du bus externe (18) est plus grande que la longueur du bus interne (14).

7. Processeur selon l'une des revendications précédentes,
dans lequel l'unité de configuration de mémoire à registres (20) est disposée de manière à configurer dans la mémoire à registres, selon les besoins, des registres de nombre et de longueur différents.

8. Système d'ordinateur aux caractéristiques suivantes:
une CPU hôte;
un appareil périphérique qui est relié à la CPU hôte par l'intermédiaire d'un bus externe (18) et qui présente une mémoire interne (12); et
**caractérisé par**
une unité de configuration de mémoire (20), l'unité de configuration de mémoire (20) étant réalisée de manière à mettre, selon les besoins, de la place (12a) de la mémoire interne à disposition de l'appareil périphérique, et à mettre de la place (12b) de la mémoire interne, qui n'est pas mise à disposition de l'appareil périphérique, à disposition par l'intermédiaire d'un accès au moyen d'un bus externe (18, 24) pour d'autres données.

9. Système d'ordinateur selon la revendication 8, présentant, par ailleurs, un moyen d'adressage, le moyen d'adressage étant disposé de manière à adresser la mémoire interne de l'appareil périphérique qui n'est pas mise à disposition de l'appareil périphérique comme une mémoire externe du système d'ordinateur.

10. Système d'ordinateur selon la revendication 8 ou 9,
dans lequel l'unité de configuration de mémoire à registres (20) fait partie de l'appareil périphérique.

11. Système d'ordinateur selon l'une des revendications 8 à 10,
dans lequel l'unité de configuration de mémoire (20) est disposée de manière à vérifier si l'appareil périphérique est actif, et
au cas où l'appareil périphérique n'est pas actif, mettre à disposition du système d'ordinateur toute la mémoire interne de l'appareil périphérique comme mémoire de travail.

12. Système d'ordinateur selon l'une des revendications 8 à 11, qui est réalisé sous forme de CI de carte à puce ou de CI de sécurité.
